# EUROPEAN PATENT APPLICATION

(11) **EP 4 488 205 A1**
(43) Date of publication of application: **08.01.2025**
(21) Application number: 23315268.5
(22) Date of filing: 03.07.2023
(51) Int. Cl.: B65G 47/90, B65G 54/02, B65G 47/86, B65G 47/84

(54) **A SYSTEM FOR HANDLING INDIVIDUAL PRIMARY PACKAGING CONTAINERS**

(71) Applicant: Forspective, 36000 Châteauroux (FR)
(72) Inventor: Duperray, Philippe, 36000 Châteauroux (FR)
(74) Representative: BiiP bv

(57) **Abstract**

The present invention is directed to a primary container handling system (a) for being installed adjacent a primary container transporting unit or processing unit, said system comprising a closed loop transportation unit transporting a plurality of container handling units each mounted on an independently motion controlled mover (b), each container handling unit comprising a pivoting claw (c) coupled to the mover (b) by a pivot (d) driven by a pivot driving mechanism, wherein the pivot driving mechanism and the pitch and pace of the motion-controlled movers (b) is adapted for moving the claw (c) relative to a plurality of moving primary containers (e) on said primary container transporting unit or processing unit such as to drive the claw (c) between two moving consecutive individual primary containers (e).

## Description

### FIELD OF INVENTION

The present invention generally relates to a system comprising a transportation unit equipped with container handling units for processing primary containers, and in particular for cans and bottles.

### BACKGROUND OF INVENTION

For handling, treating, loading/unloading and performing processing steps such as filling, rinsing, capping, labelling, inspecting, on primary packaging containers, many processing methods, systems and related architectures have been conventionally used. Such processing systems generally include one or more transportation units equipped with conventional means of handling the primary containers, and thereby moving the primary containers with a certain pitch and pace from one place to another, or one machine to another, or one conveyor to another conveyor etc.

A general problem of the conventional architectures for primary containers is that they repeatedly switch between buffer, bulk (en-mass), multi-lane, or single lane handling and so requiring transition via timing or pitch setting infeed or outfeed devices such as a scroll (worm), a star wheel, infeed guides etc. to individual primary container handling.

Scroll (worm), star wheel and guide architectures in container handling process systems have usually, especially for high-capacity machines, large foot prints, and have complex machine structures and drives. Further, such scroll, star wheel and guide architectures may be challenging for personnel to access various parts or components of the processing machines, occupy more space and do not allow ease in retrieval or changing of parts.

A second general problem of conventional primary container handling systems, such as scrolls (worms) star wheels and guides, is that they are unable to differentiate between various sizes of primary containers such as cans or bottles. Consequently, the changing of parts becomes a necessary step in reconfiguring the processing systems, for each different diameter, skirt and/or shoulder height of primary packaging container, resulting in lost production time and impacting productivity.

In an attempt to replace star wheel based infeed and outfeed configurations for primary containers, US2013026005A1provides a transporting apparatus comprising a transporting path which has its entire length arranged between a first and second container processing system and along which the containers can be transported by container handling units such as clamps, wherein the pitch and pace of the transporting elements compensate for a difference in speeds of transportation of the containers in the first and second container processing system.

In the above attempt, although transporting elements are synchronized with the pitch and pace of first and second container processing system, the transporting elements are still unable to differentiate between various sizes various primary packaging containers.

EP3755633A1 addresses this problem and proposed the used of two semi-grippers respectively mounted on two consecutive movers movable towards each other so as to adjust the reciprocal distance and the picking area of the gripper to the type of container with particular reference to the diameter of the container. It is however clear that requiring two movers per container increases cost and complexity.

Further, a remaining problem in US2013026005A1 is that the system described provides outfeed and infeed of separated individual primary containers and is not able to take primary containers under line pressure, i.e. touching each other in a typically uncontrollable flow and under external pressure generated by the line.

In addition, the system of US2013026005 requires a complex power system enabling providing power to each transporting element and to each clamp.

Considering the above, it is a first general objective of the present invention to provide a flexible, efficient, high capacity, space saving, less complex primary container handling system which as well can process a wide range of primary container sizes without changing parts.

It is also a general objective of the present Invention to provide processing systems allowing treating individual primary containers. Increasing the amount of individual primary container treatment reduces container to container contact, may limit scroll (worm) and star wheel and guide configurations and may reduce circumstances where the containers can be subject to impact and shear forces. Achieving this would enable progress in light weighting the containers as part of measures to lower packaging material costs, reduce material consumptions and make advancements in sustainability.

Accordingly, as can be seen from the foregoing discussion, it is a particular objective of the present invention to provide a flexible, high speed, but less complex primary container handling system able to separate primary containers under line pressure and feed it with dedicated pitch and pace to a container transportation unit or processing unit, or to feed out with dedicated pitch and pace.

Another particular objective of the present invention is to provide a flexible, high speed, but less complex primary container handling system that is optionally able to outfeed to several lanes simultaneously, which opens also the possibility to feed in or to outfeed grouped articles.

Still another particular objective of the present invention is to provide a flexible high speed primary container handling system which does not require a complex power system providing power to each transporting element and to each clamp.

### SUMMARY OF THE INVENTION

In an aspect of the present invention, a primary container handling system is provided for being installed adjacent a primary container transporting unit or processing unit, said system comprising a closed loop transportation unit transporting a plurality of container handling units each mounted on an independently motion controlled mover, each container handling unit comprising a pivoting claw coupled to the mover by a pivot driven by a pivot driving mechanism, wherein the pivot driving mechanism and the pitch and pace of the motion-controlled movers is adapted for moving the claw relative to a plurality of moving primary containers on said primary container transporting unit or processing unit such as to drive the claw between two moving consecutive individual primary containers.

In an additional aspect of the present invention, a primary container processing system may be provided comprising a primary container handling system as described throughout this text and further comprising at least one adjacent primary container transportation unit and/or at least one primary container processing station.

Such primary container processing system may be part of a machine for one or any combination of rinsing, filling, capping, orienting, decorating, inspecting, scanning, weighing, cutting, trimming, polishing, coating, hardening, etching, printing, surface treating, pressing, forcing, pressurizing/evacuating, vibrating, heating, cooling primary containers.

### BRIEF DESCRIPTION OF DRAWINGS

FIG 1 illustrates an embodiment of a primary container handling system according to the present invention.

FIG 2 and 3 illustrate a primary container handling unit as used in accordance with the present invention.

FIG 4 and 5 illustrate a pivot driving mechanism constituted by a cam and follower mechanism as used in an embodiment of the present invention.

FIG 6 and 7 illustrate an embodiment of the present invention wherein the primary container handling system is able to treat a variety of primary container diameters by adapting the pitch of consecutive movers.

FIG 8 illustrates an embodiment of a primary container processing system in accordance with the present invention.

### DETAILED DESCRIPTION

The present invention provides a primary container handling system (a) comprising at least one closed loop transportation unit equipped a plurality of container handling units each mounted on an independently motion controlled movers (b), each container handling unit comprising a pivoting claw (c) coupled to the mover by a pivot (d) driven by a pivot driving mechanism.

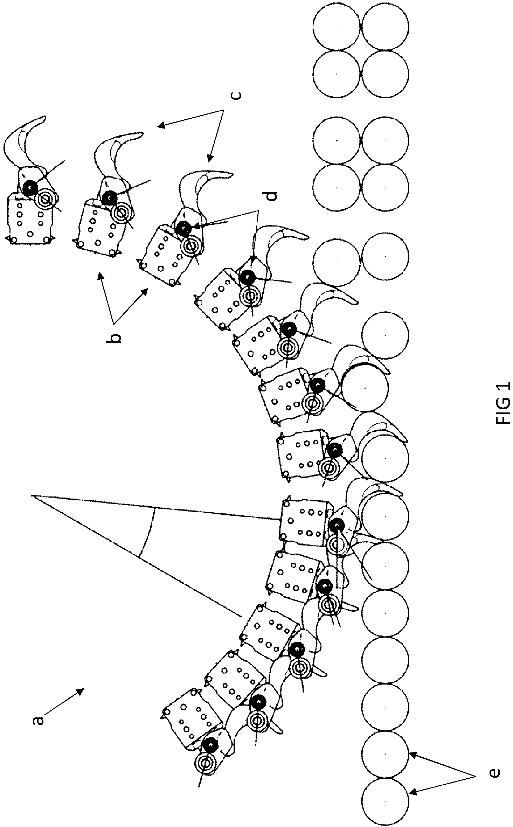

As illustrated in FIG 1, the claws (c) are driven between two moving consecutive individual primary containers (e) for at least temporarily holding and releasing an individual primary container in the sense that a container moving on an adjacent container transportation system or processing system is temporarily hindered in moving forward at standard pace and then released again. Standard pace is the pace at which a container moves on an adjacent container transportation system or processing system if not hindered. Hindered in moving forward at normal pace may include deceleration as well as acceleration of an individual primary container or a group of containers.

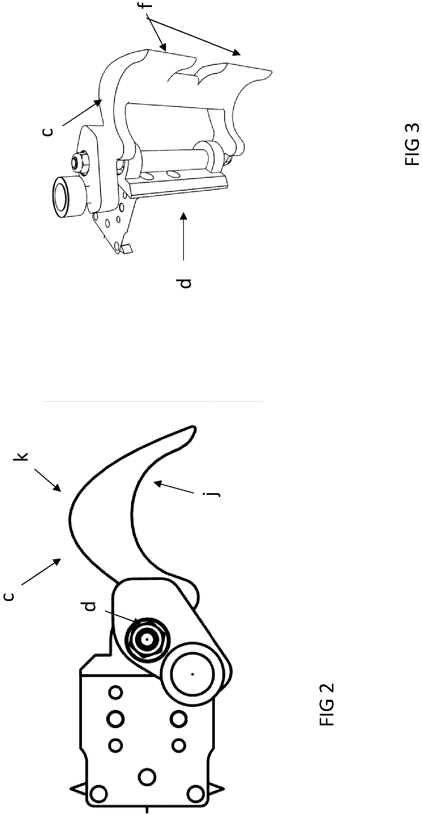

As illustrated in FIG 2 (top view) and 3 (front view), such claw may be configured by any type of claw-shaped tool having a curvature fitting more or less an individual primary container and may be adapted in particular cases for primary container neck and/or body gripping. Next to circular, the curvature may be for example ovoid, rectangular, tapered, etc.

in the context of present invention, primary containers may be all types of primary packaging allowed to be pulled or pushed by a claw-shaped tool, in particular cylindrical body-shaped primary packaging such as cans or bottles, either for food or non-food applications.

Each claw may comprise at least one finger (f) having sufficient curvature for more or less fitting a primary container and for pulling it in a direction of movement opposite the direction of movement of the primary containers moving on the adjacent container transportation unit or processing unit. Optionally, a plurality of fingers is possible for better fitting or a more robust and stable gripping action.

The claw may be coupled by a pivot (d) to the mover, on top of the mover, or underneath the mover, or in line with the mover, or optionally with an offset to the center of the closed loop transportation unit such that the claws may come closer together when running on a relatively small radius closed transportation unit, thereby allowing treatment of smaller diameter containers.

The claw or at least the finger(s) may be made of any type of hard, low friction and low moist absorptive plastic, for example polyamide.

In an embodiment of the present invention, the pivot driving mechanism of at least one container handling unit and the pitch and pace of its respective motion-controlled mover is adapted for driving the claw between two touching and moving primary containers to enable separating individual primary containers or separating groups of primary containers.

In an embodiment of the present invention, the pivot driving mechanism of at least one container handling unit and the pitch and pace of its respective motion-controlled mover is adapted to drive the claw in a pulling movement for pulling an individual primary container.

In an embodiment of the present invention, the pivot driving mechanism of at least one container handling unit and the pitch and pace of its respective motion-controlled mover is adapted to drive the claw in a pushing movement for pushing an individual primary container.

Such pulling or pushing movement may occur in the direction of movement of the primary containers on the adjacent primary container transporting unit or processing unit, or opposite the direction of movement, or in an angle relative to said direction of movement, or in any possible combination thereof.

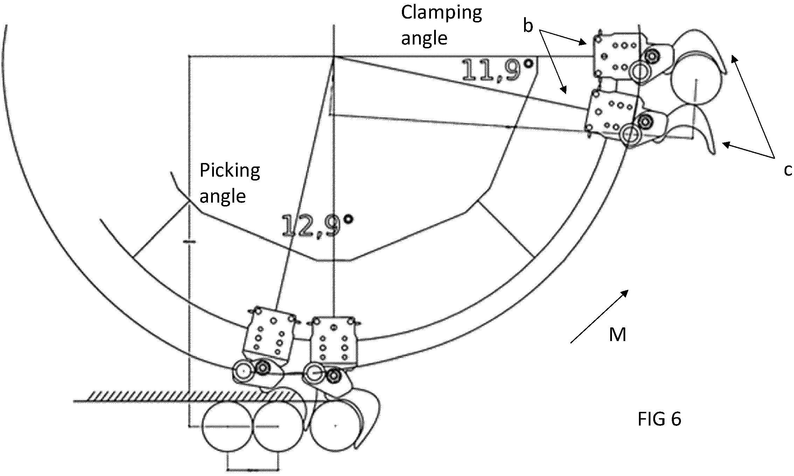

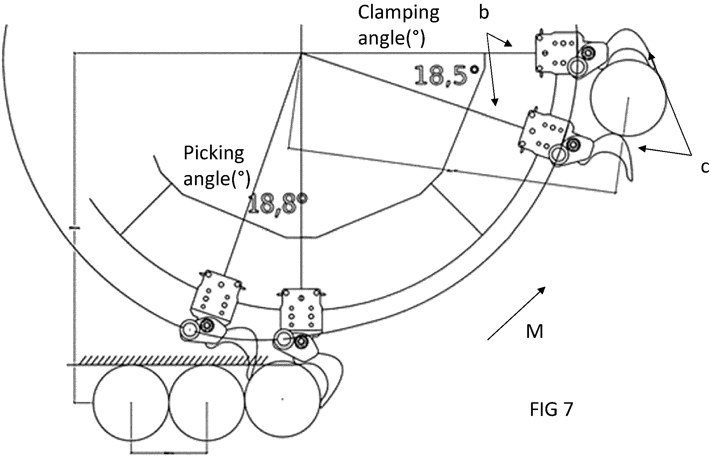

In accordance with the invention, in view of enabling smoothly driving the claw between two moving consecutive individual primary containers, and particularly for smooth separation of touching containers under line pressure, said claws, each having a concave (j) and convex (k) side, are mounted with its concave side facing opposite the direction of movement (M) of the container handling units (see FIG 6 and 7). However convex side facing opposite the direction of movement may be a possibility as well, e.g. to enable pushing a group of containers on the adjacent primary container transporting unit or processing unit.

In an embodiment of the present invention, each container handling unit may comprise an individual pivot driving mechanism, each mechanism individually powered for driving its respective pivot.

Alternatively and preferably, each container handling unit may consist of the pivoting claw coupled to the mover by the pivot and part of the pivot driving mechanism, and wherein the other part of the pivot driving mechanism not present on the container handling units may be common to all container handling units. Preferably, the common part is powered while the part present on each container handling units does not require power.

In an embodiment of the present invention, the pivot driving mechanism is constituted by a cam and follower mechanism, wherein each pivot located on each container handling unit is coupled to a follower.

In the context of the present invention, the cam and follower mechanism is considered a device that converts rotational motion into reciprocating motion, in this case the reciprocating motion of the follower necessary to drive the pivot for actuating the claw.

In an embodiment of the present invention, the cam is stationary and the followers are located on the independently motion controlled movers or on the container handling units, such that by moving along the closed loop transportation unit and following the cam, the rotational motion is converted into reciprocating motion, in this case the reciprocating motion of the follower necessary to drive the pivot for actuating the claw. Person skilled in the art appreciates that such mechanism does not require individual electrical power to the container handling units to electrically power the pivot driving system as the followers, and so the pivots and claws, are mechanically powered by following the cam, i.e. such container handling system only requires electrical power to the motion-controlled movers and not to the individual container handling units.

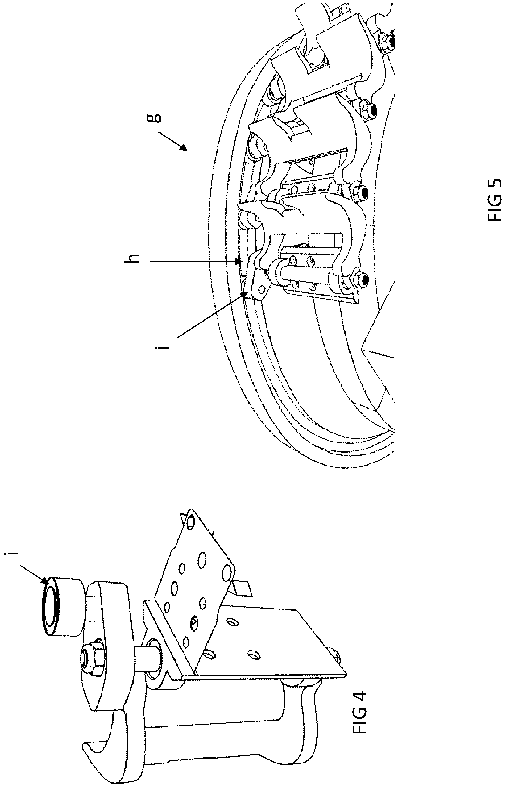

An embodiment of the present invention, the cam is a single disc-shaped cam and the followers are a plurality of rollers in rolling contact with the cam, wherein each pivot located on each container handling unit is coupled to one of said plurality of rollers. Such disc-shaped cam may have a particular perimeter to be followed by the rollers corresponding to the desired reciprocating moment. Preferably, and as illustrated in FIG 4 and 5, such disc-shaped cam (g) may be a face cam having the rollers rolling in a particular closed curved groove (h) on the face of the disk to generate a repetitive reciprocating motion of the rollers (i) , and so the pivots and claws.

In the present invention, the cam may be made of any type of hard, low friction and low moist absorptive plastic, for example polyamide.

In a preferred embodiment of the present invention, the container handling units do not comprise means for supporting the bottom of the individual primary container. As the primary container handling system of the present invention is provided for being installed adjacent a primary container transporting unit or processing unit, the means for supporting the primary containers in such transporting unit or processing unit, eg. a conveyer belt or any other type of means will maintain its support while the primary container handling system acts on the primary containers, for example while separating and/or grouping. In case a minimum bottom support is desired, the claw may comprise a minimum bottom support, e.g. a partially enlarged rim.

In a further embodiment of the present invention said claw is adapted for primary container neck and/or body pushing or pulling.

To achieve improved control of an individual container, three-point contact between an individual container and its two neighboring claws is preferred, namely two points of contact at the side of the container facing the concave side of one claw and one point of contact at the side of the container facing the convex side of the other claw. When aiming an individual container having a diameter not fully fitting in the claw's cavity to be pulled or pushed under an angle with respect to the direction of movement of the adjacent transporting unit or processing unit, a three-point contact established by two consecutive claws may be still sufficient for efficient container handling. This enables the handling of an increased variety of primary container diameters by only changing the pitch and pace of the consecutive container handling units while not changing the claw size, neither the pivot driving mechanism. FIG 6 and 7 respectively illustrate an example wherein the angle between consecutive movers (b) for moving between two containers (picking angle) and for clamping such container (clamping angle) is shown and adapted for a container diameter size of 60mm and 100mm.

Preferably, two points of contact may be at the leading edge of the container with the third point of contact at the trailing edge of the container, i.e. the claws are mounted with its concave side facing opposite the direction of movement of the container handling units.

Alternatively, instead of establishing the third point of contact by the concave side of a neighboring claw, the third point of contact could be established by an articulating member on the container handling unit to clamp an individual container without requiring the concave side of a second neighboring claw. This would allow greater pitch between consecutive container handling units and so between treated containers. When moving a container with the intention to achieve greater pitch than is possible by consecutive container handling units, the three-point contact is initially established by two consecutive container handling units up to maximum pitch possible and then further established or maintained by the articulating member to further increase the pitch.

In a particular embodiment of the present invention, the pivot driving mechanisms of at least two consecutive container handling units and the pitch and pace of its respective motion-controlled movers are adapted for driving its respective claws between three moving consecutive individual primary containers such as to clamp the second container of said individual primary containers. In such case, the second container is held in the cavity of the concave side of one claw by a pushing movement of the convex side of the second claw. Consequently, the container handling units do not individually require means for clamping an individual primary container.

Further, the primary container handling system of the present invention may comprise a control system enabling control of the movement of the motion-controlled movers relative to the adjacent primary container transportation unit or processing station, preferably relative to the primary containers present on the primary container transportation unit or processing station.

In a further embodiment in accordance with the present invention, a primary container transportation unit or processing station adjacent the primary container handling system may comprise motion-controlled movers as well. In such case, the control system of the primary container handling system according to the present invention may enable moving the container handling units and its claws in synchronized motion, pitch and pace with the movers of the primary handling transportation unit or processing unit, or vice versa.

The closed loop transportation unit may be a rail mounted independent mover-based system, such as a linear drive motor, or independent cart, or slides, or tracks, or any other type of driving means adapted to curvilinearly propel the movers in an independent and controlled way. The closed loop may be circular, or non-circular. In a particular embodiment it may have a larger radius (or even zero radius) in a container picking or placing zone adjacent the transportation or processing unit, thereby enabling the claws to move closer together and treat containers at smaller pitch. Such might allow the treatment of primary containers with minimum diameter smaller than the minimum diameter possible when using a circular closed loop.

The motion-controlled movers may be inductively powered and/or wirelessly controlled unit and may be equipped with a wireless client transmitter/receiver enabling untethered machine automation control of the pitch and pace of the container handling units on the closed loop transportation unit.

The container handling system of the present invention is adapted for performing one or more types of transportation, separating, or grouping operations on the individual primary containers, and may include infeed and/or outfeed and/or transfer to or between primary container processing units.

The primary container handling systems of the present invention may be dynamically controlled using a software program with optional feedback sensing mechanism. Based on various sizes of the primary containers, as illustrated in FIG 6 and 7, the container handling system may flexibly and dynamically adapt the pitch and pace of its movers relative to the size, in particular the diameter, of the primary containers on the adjacent container transportation system or processing system. It should be appreciated that the

Optionally, the container handling units may comprise of a sensing mechanism including one or more sensors In communication with a controlling unit. The sensors may detect the size of the primary container, communicate the same to the controlling unit, which in turn can control and adapt the motion of the movers depending on the type of primary container.

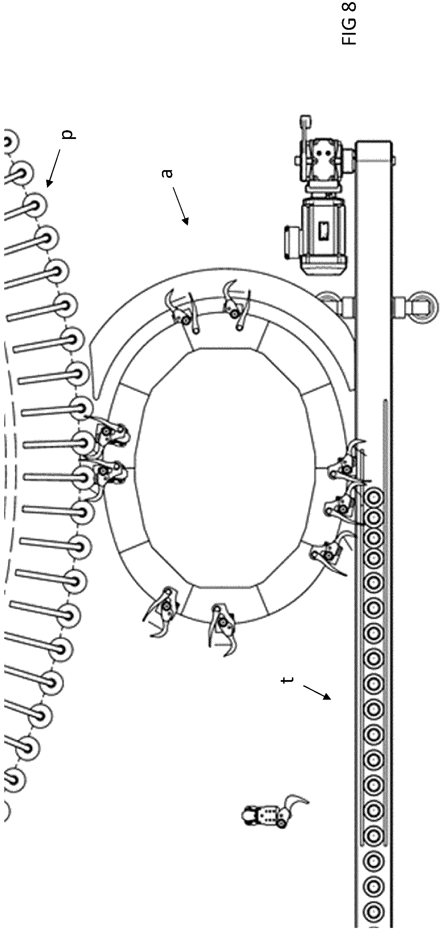

In an additional aspect of the present invention and as illustrated in FIG 8, a primary container processing system may be provided comprising a primary container handling system (a) as described throughout this text and further comprising at least one adjacent primary container transportation unit (t) and/or at least one primary container processing station (p).

Such primary container processing system may be part of a machine for one or any combination of rinsing, filling, capping, orienting, decorating, inspecting, scanning, weighing, cutting, trimming, polishing, coating, hardening, etching, printing, surface treating, pressing, forcing, pressurizing/evacuating, vibrating, heating, cooling primary containers.

## Claims

1. A primary container handling system for being installed adjacent a primary container transporting unit or processing unit, said system comprising a closed loop transportation unit transporting a plurality of container handling units each mounted on an independently motion controlled mover, each container handling unit comprising a pivoting claw coupled to the mover by a pivot driven by a pivot driving mechanism, wherein the pivot driving mechanism and the pitch and pace of the motion-controlled movers is adapted for moving the claw relative to a plurality of moving primary containers on said primary container transporting unit or processing unit such as to drive the claw between two moving consecutive individual primary containers.

2. A system according to claim 1, wherein said claws, each having a concave and convex side, are mounted with its concave side facing opposite the direction of movement of the container handling units.

3. A system according to claim 1 wherein each container handling unit consists of the pivoting claw coupled to the mover by the pivot and at least part of the pivot driving mechanism.

4. A system according to claim 1, wherein the pivot driving mechanism is constituted by cam and follower mechanism, wherein each pivot located on each container handling unit is coupled to a follower.

5. A system according to claim 4, wherein the cam is stationary and wherein the followers are located on the independently motion controlled movers or on the container handling units.

6. A system according to claims 4 or 5, wherein the cam is a single disc-shaped cam and wherein the followers are a plurality of rollers in rolling contact with the cam, and wherein each pivot located on each container handling unit is coupled to one of said plurality of rollers.

7. A system according to any of the foregoing claims, wherein the pivot driving mechanism of at least one container handling unit and the pitch and pace of its respective motion-controlled mover is adapted for driving the claw between two touching and moving primary containers to enable separating individual primary containers or separating groups of primary containers.

8. A system according to any of the foregoing claims, wherein the pivot driving mechanism of at least one container handling unit and the pitch and pace of its respective motion-controlled mover is adapted to drive the claw in a pulling movement for pulling an individual primary container.

9. A system according to any of the foregoing claims, wherein the pivot driving mechanism of at least one container handling unit and the pitch and pace of its respective motion-controlled mover is adapted to drive the claw in a pushing movement for pushing an individual primary container.

10. A system according to claims 8 or 9, wherein said pulling or pushing movement may occur in the direction of movement of the primary containers on the adjacent primary container transporting unit or processing unit, or opposite the direction of movement, or in an angle relative to said direction of movement, or in any possible combination thereof.

11. A system according to any of the foregoing claims, wherein the pivot driving mechanisms of at least two consecutive container handling units and the pitch and pace of its respective motion-controlled movers are adapted for driving its respective claws between three moving consecutive individual primary containers such as to clamp the second container of said individual primary containers.

12. A system according to any of the above claims, wherein said transportation unit is a closed loop linear drive.

13. A system according to any of the foregoing claims, further comprising a control system enabling control of the pitch and pace of the motion-controlled movers relative to the adjacent primary container transportation unit or processing station.

14. A primary container processing system comprising a primary container handling system in accordance with any of the above claims and further comprising at least one adjacent primary container transportation unit and/or at least one primary container processing station.
